# EUROPÄISCHE PATENTANMELDUNG

(11) **EP 1 281 893 A2**
(43) Veröffentlichungstag der Anmeldung: **05.02.2003**
(21) Anmeldenummer: 02012775.9
(22) Anmeldetag: 10.06.2002
(51) Int. Cl.: F16H 21/18

(54) **Schubkurbeltrieb**

(30) Priorität: 02.08.2001 DE 10137886
(71) Anmelder: Hein, Lehmann Trenn- und Fördertechnik GmbH, D-47805 Krefeld (DE)
(72) Erfinder: Grübl, Ernst, 41748 Viersen (DE)
(74) Vertreter: COHAUSZ DAWIDOWICZ HANNIG & PARTNER

(57) **Zusammenfassung**

Die Erfindung betrifft einen Schubkurbeltrieb zur Erzeugung einer oszillierenden Bewegung einer Maschinenmasse, insbesondere von Siebmaschinen, Trocknern und Förderern, wobei auf mindestens einer motorisch angetriebenen Welle eine Kurbel befestigt ist, die über eine Schubstange an der Maschinenmasse angelenkt ist. Auf der Welle ist eine Ausgleichsmasse exzentrisch befestigt und neben der ersten Welle ist eine zweite Welle parallel zur ersten gelagert, auf der eine zweite Ausgleichsmasse exzentrisch befestigt ist, die sich mit derselben Drehzahl wie die erste Welle aber in der entgegengesetzten Drehrichtung dreht. Die beiden Ausgleichsmassen sind so auf den Wellen angeordnet, dass sie jeweils auf der der Kurbel gegenüberliegenden Seite der Welle liegen, und dass sich bei gegenläufig drehenden Wellen die Summe der Fliehkraftkomponenten der Ausgleichsmassen in Bewegungsrichtung der Maschine und die Massenkraft der Maschine (in jeder Drehstellung der Wellen) ausgleicht und die senkrecht zur Maschinenbewegung auftretenden Fliehkraftkomponenten der einzelnen Ausgleichsmassen sich durch die gegenläufige Drehbewegung der Wellen gegenseitig aufheben.

## Beschreibung

Die Erfindung betrifft einen Schubkurbeltrieb zur Erzeugung einer oszillierenden Bewegung einer Maschinenmasse, insbesondere von Siebmaschinen, Trocknern und Förderern, wobei auf mindestens einer motorisch angetriebenen Welle eine Kurbel befestigt ist, die über eine Schubstange an der Maschinenmasse angelenkt ist.

Es ist bekannt, Siebe, Trockner oder Förderer durch eine Kurbel zu betätigen, wobei es auch bekannt ist, auf der Welle, um die die Kurbel sich dreht, eine Ausgleichsmasse zu befestigen. Diese Ausgleichsmasse führt aber dazu, dass sie rechtwinklig zur Schubrichtung Kräfte erzeugt, die zu unerwünschten Querschwingungen führen.

Aufgabe der Erfindung ist es, einen Schubkurbeltrieb der eingangs genannten Art so zu verbessern, dass in Richtungen quer zur Schubbewegung Kräfte und Bewegungen durch die Ausgleichsmasse nicht erzeugt werden.

Diese Aufgabe wird erfindungsgemäß dadurch gelöst, dass auf der Welle eine Ausgleichsmasse exzentrisch befestigt ist und neben der ersten Welle eine zweite Welle parallel zur ersten gelagert ist, auf der eine zweite Ausgleichsmasse exzentrisch befestigt ist, die sich mit derselben Drehzahl wie die erste Welle aber in der entgegengesetzten Drehrichtung dreht, wobei die beiden Ausgleichsmassen so auf den Wellen angeordnet sind, dass sie jeweils auf der der Kurbel gegenüberliegenden Seite der Welle liegen, und dass sich bei gegenläufig drehenden Wellen die Summe der Fliehkraftkomponenten der Ausgleichsmassen in Bewegungsrichtung der Maschine und die Massenkraft der Maschine (in jeder Drehstellung der Wellen) ausgleicht und die senkrecht zur Maschinenbewegung auftretenden Fliehkraftkomponenten der einzelnen Ausgleichsmassen sich durch die gegenläufige Drehbewegung der Wellen gegenseitig aufheben.

Durch eine solche Konstruktion heben sich die von beiden Ausgleichsmassen erzeugten Kräfte quer zur Schubrichtung gegenseitig auf, so dass die Maschine, der Antrieb und das Fundament geschont werden.

Hierbei wird vorzugsweise vorgeschlagen, dass die beiden Ausgleichsmassen so auf den Wellen angeordnet sind, dass in einer Drehstellung, in der die beiden Kurbeln miteinander fluchten und einander zugewandt und einander am nächsten sind, die beiden Ausgleichsmassen außen liegen und voneinander am entferntesten und voneinander abgewandt sind. Besonders vorteilhaft ist es, wenn auf der zweiten Welle auch eine Kurbel befestigt ist, die über eine weitere Schubstange an der Maschinenmasse angelenkt ist. Damit werden die von beiden Kurbeln erzeugten Schubbewegungen besonders sicher und verlustarm auf das bewegende Teil übertragen.

Von Vorteil ist, wenn die beiden Wellen in einer Ebene liegen, die rechtwinklig zur Bewegungsrichtung der Maschinenmasse ist. Auch wird vorgeschlagen, dass die Ausgleichsmasse zur Welle diametral der Kurbel gegenüberliegt.

Vorzugsweise wird vorgeschlagen, dass die zweite Welle von der ersten oder die erste Welle von der zweiten angetrieben ist. Auch ist von Vorteil, wenn jede Welle von einem Motor mit derselben Drehzahl gegenläufig synchron angetrieben ist.

Zwei Ausführungsbeispiele der Erfindung sind in der Zeichnung in Seitenansichten schematisch dargestellt und werden im folgenden näher beschrieben. Es zeigen
- Fig. 1: einen Schubkurbeltrieb mit zwei Kurbeln und je einer Schubstange und
- Fig. 2: einen Schubkurbeltrieb mit einer Kurbel, einer Schubstange und einer zweiten sich drehenden Ausgleichsmasse, die von der ersten Kurbelwelle gegenläufig angetrieben ist.

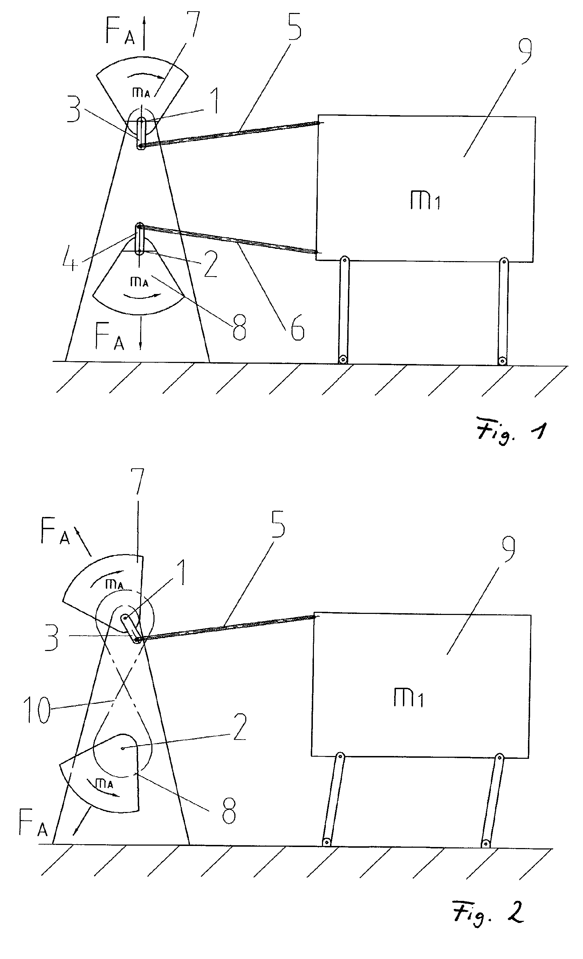

Fig. 1 zeigt einen Schubkurbeltrieb in Doppelwellenausführung mit einem auf die oszillierende Maschinenmasse 9 abgestimmten Massenausgleich.

Bei der Erfindung handelt es sich um eine Antriebseinheit für linear schwingende Maschinen, z.B. Siebmaschinen, Trockner oder Förderrinnen. Die lineare Schwingbewegung von 1 bis 50 mm Schwingweite, insbesondere 24 mm, bei einer Maschinendrehzahl von 1 bis 750 min⁻¹, insbesondere 250 bis 300 min⁻¹, wird von zwei mit gegenläufiger Drehrichtung motorisch angetriebenen Exzenterwellen 1, 2 erzeugt.

Über die Verbindung der Kurbel 3, 4 mit der Schubstange 5, 6 wird die Rotationsbewegung der Exzenter in eine Linearbewegung am Pleuellager überführt.

Um die dynamischen Kräfte der Maschinenkonstruktion in Schwingrichtung (X-Achse) aufzuheben, besitzt die Antriebseinheit Ausgleichsmassen 7, 8. Diese Ausgleichsmassen sind an den zwei Antriebswellen um 180° versetzt zu den Kurbelzapfen (Richtung der Exzentrizität) angebracht. Durch die gegenläufig rotierenden Antriebswellen mit den Ausgleichsmassen heben sich alle in Y-Achse auftretenden Fliehkräfte gegenseitig auf.

Das Ausführungsbeispiel nach Fig. 2 unterscheidet sich von dem nach Fig. 1 dadurch, dass nur eine Kurbel 3 mit Ausgleichsmasse 7 und Schubstange 5 vorgesehen ist. Die Welle 1 dieser ersten Kurbel treibt gegenläufig, insbesondere über einen sich kreuzenden Riemen 10, eine zweite Welle 2 an, die keine Kurbel, sondern nur eine Ausgleichsmasse 8 trägt. Der Antrieb und die Synchronisation der zweiten Welle mit der Ausgleichsmasse kann ebenfalls durch ein zwischengeschaltetes Getriebe, einen doppelseitigen Zahnriemen (Synchron-Riemen), einer Kette o. ä. erfolgen.

## Patentansprüche

1. Schubkurbeltrieb zur Erzeugung einer oszillierenden Bewegung einer Maschinenmasse (9), insbesondere von Siebmaschinen, Trocknern und Förderern, wobei auf mindestens einer motorisch angetriebenen Welle (1) eine Kurbel (3) befestigt ist, die über eine Schubstange (5) an der Maschinenmasse angelenkt ist,
**dadurch gekennzeichnet, dass** auf der Welle (1) eine Ausgleichsmasse (7) exzentrisch befestigt ist und neben der ersten Welle (1) eine zweite Welle (2) parallel zur ersten gelagert ist, auf der eine zweite Ausgleichsmasse (8) exzentrisch befestigt ist, die sich mit derselben Drehzahl wie die erste Welle aber in der entgegengesetzten Drehrichtung dreht, wobei die beiden Ausgleichsmassen (7, 8) so auf den Wellen (1, 2) angeordnet sind, dass sie jeweils auf der der Kurbel (3, 4) gegenüberliegenden Seite der Welle liegen, und dass sich bei gegenläufig drehenden Wellen die Summe der Fliehkraftkomponenten der Ausgleichsmassen (7, 8) in Bewegungsrichtung der Maschine und die Massenkraft der Maschine (in jeder Drehstellung der Wellen) ausgleicht und die senkrecht zur Maschinenbewegung auftretenden Fliehkraftkomponenten der einzelnen Ausgleichsmassen sich durch die gegenläufige Drehbewegung der Wellen gegenseitig aufheben.

2. Schubkurbeltrieb nach Anspruch 1,
**dadurch gekennzeichnet, dass** die beiden Ausgleichsmassen (7, 8) so auf den Wellen (1, 2) angeordnet sind, dass in einer Drehstellung, in der die beiden Kurbeln (3, 4) miteinander fluchten und einander zugewandt und einander am nächsten sind, die beiden Ausgleichsmassen (7, 8) außen liegen und voneinander am entferntesten und voneinander abgewandt sind.

3. Schubkurbeltrieb nach Anspruch 1 oder 2,
**dadurch gekennzeichnet**, dassaufderzweitenWelle(2)auch eine Kurbel (4) befestigt ist, die über eine weitere Schubstange (6) an der Maschinenmasse (9) angelenkt ist.

4. Schubkurbeltrieb nach einem der vorherigen Ansprüche,
**dadurch gekennzeichnet, dass** die beiden Wellen (1, 2) in einer Ebene liegen, die rechtwinklig zur Bewegungsrichtung der Maschinenmasse (9) ist.

5. Schubkurbeltrieb nach einem der vorherigen Ansprüche,
**dadurch gekennzeichnet, dass** die Ausgleichsmasse (7, 8) zur Welle (1, 2) diametral der Kurbel (3, 4) gegenüberliegt.

6. Schubkurbeltrieb nach einem der vorherigen Ansprüche,
**dadurch gekennzeichnet, dass** die zweite Welle (2) von der ersten oder die erste Welle (1) von der zweiten angetrieben ist.

7. Schubkurbeltrieb nach einem der Ansprüche 1 bis 5,
**dadurch gekennzeichnet, dass** jede Welle (1, 2) von einem Motor mit derselben Drehzahl gegenläufig synchron angetrieben ist.
